# FASCICULE DE BREVET EUROPEEN

(11) **EP 1 483 997 B1**
(45) Date de publication et mention de la délivrance du brevet: **29.11.2006**
(21) Numéro de dépôt: 04356085.3
(22) Date de dépôt: 02.06.2004
(51) Int. Cl.: A47J 43/07, A47J 43/044

(54) **Accessoire de travail rotatif pour la préparation de boissons dans un appareil électroménager de préparation culinaire**
Rotierende Arbeitsvorrichtung zur Zubereitung von Getränken in einem Küchengerät
Rotating working appliance for the preparation of drinks in a food processor

(30) Priorité: 06.06.2003 FR 0306859
(43) Date de publication de la demande: 08.12.2004
(73) Titulaire: SEB S.A., 69130 Ecully (FR)
(72) Inventeur: Charles, Patrick, 65290 Louey (FR); Rouches, Alexandre, 65310 Horgues (FR); Smit, Robert, 65290 Louey (FR)
(74) Mandataire: Kiehl, Hubert

(56) Documents cités:
- EP-A- 0 272 627
- DE-A- 19 732 261
- US-A- 4 813 624
- US-A1- 2003 007 418
- US-B1- 6 193 181

## Description

La présente invention se rapporte au domaine technique général des appareils électroménagers de préparation culinaire comportant un accessoire de travail rotatif tournant dans un récipient de travail.

La présente invention concerne notamment les mini-hachoirs comportant un boîtier moteur disposé sur le récipient de travail. La présente invention concerne également les récipients de travail comportant un accessoire de travail rotatif entraîné par un appareil de type pied mixer. La présente invention concerne également les robots ménagers comportant un récipient de travail présentant un dispositif d'entraînement dans le fond du récipient de travail.

La présente invention se rapporte plus particulièrement à un accessoire de travail rotatif prévu pour la préparation de boissons.

Pour les appareils comportant un boîtier moteur disposé sur le récipient de travail, sont connus des accessoires de travail rotatifs présentant des parties saillantes prévues pour hacher, broyer ou pulvériser les aliments, ainsi que des accessoires de travail rotatifs sous forme de disque ou de pales, prévus pour réaliser des émulsions. Toutefois, aucun des accessoires de travail rotatifs précités ne permet de préparer de manière simple et efficace des boissons telles que des milk-shake, des cocktails avec des glaçons, des glaces à partir de fruits passés au congélateur, des granita à partir de glaçons et de sirop, du café frappé à partir de café liquide ou soluble, de glaçons et de sucre. Les outils pour hacher, broyer ou pulvériser ne sont généralement pas adaptés au traitement des glaçons. Les outils pour émulsionner sont plutôt adaptés à la préparation de sauces, ou d'émulsions telles que la mayonnaise, mais pas adaptés à la réalisation des préparations précitées.

Parmi les appareils comportant un accessoire de travail rotatif agencé dans un récipient avec des moyens d'entraînement, les blenders comportent un récipient de travail et un outil de travail rotatif particulièrement adaptés pour la préparation de boissons à partir de fruits, légumes, liquides, voire glaçons. Toutefois ces appareils sont généralement exclusivement dédiés à ces préparations. De plus, le nettoyage de l'outil de travail rotatif est souvent malaisé.

Un accessoire de travail rotatif pour appareil électroménager de préparation culinaire selon le préambule de la revendication 1 est connu du document US 4 813 624.

L'objet de la présente invention est de proposer un accessoire de travail rotatif pour appareil électroménager de préparation culinaire permettant de préparer des boissons à partir de liquides, de glaçons, de matières congelées, de fruits, de légumes, de manière simple et efficace.

Un autre objet de la présente invention est de proposer un accessoire de travail rotatif pour appareil électroménager de préparation culinaire, dont le nettoyage soit facilité.

Ces buts sont atteints avec un accessoire de travail rotatif pour appareil électroménager de préparation culinaire selon les caractéristiques de la revendication 1.

Les parties saillantes permettent de pulvériser les parties solides de la préparation telles que les glaçons. La face d'attaque de la ou des conformations saillantes permet de réaliser une agitation de la partie liquide de la préparation. La présence d'au moins un orifice favorise les échanges dans la préparation, et favorise également l'entrée d'air dans la préparation. L'entrée d'air permet la réalisation d'émulsions. La réalisation de la préparation est particulièrement aisée, puisqu'un seul accessoire est nécessaire. La préparation obtenue est remarquablement homogène. De plus, le nettoyage de l'accessoire est relativement aisé.

Selon une forme de réalisation, la ou au moins l'une des conformations saillantes est formée par une nervure radiale inférieure. D'autres formes de conformations présentant une face d'attaque sont toutefois envisageables.

Avantageusement alors, les parties saillantes sont métalliques. D'autres matières présentant une résilience suffisante, telles que des matières plastiques renforcées, sont également envisageables.

Avantageusement encore, les parties saillantes comportent un bord d'attaque non coupant. La vitesse de rotation suffit à pulvériser les aliments solides. De plus, un bord d'attaque coupant risque d'être rapidement émoussé par les chocs avec les glaçons. Cette disposition facilite en outre le nettoyage de l'accessoire.

Avantageusement encore, les parties saillantes comportent un bord d'attaque muni de dents. Cette disposition permet de faciliter l'éclatement des glaçons, et de mieux déchirer les parties fibreuses des aliments.

Avantageusement encore, une des parties saillantes est inclinée vers le haut à partir de la protubérance périphérique et une autre des parties saillantes est inclinée vers le bas à partir de la protubérance périphérique. Cette disposition permet de faciliter le mélange de la partie liquide de la préparation. Cette disposition permet également de faciliter le broyage des glaçons.

Selon un mode de réalisation avantageux, l'accessoire rotatif de préparation culinaire comporte quatre parties saillantes, deux des parties saillantes étant inclinées vers le haut et les deux autres parties saillantes étant inclinées vers le bas, les parties saillantes inclinées vers le haut et les parties saillantes inclinées vers le bas étant agencées de manière alternée autour de la protubérance. Cette disposition permet d'obtenir une bonne qualité de préparation avec un coût de fabrication limité pour l'accessoire.

Avantageusement alors, les parties saillantes sont issues de deux pièces, chaque pièce comportant l'une des parties saillantes inclinée vers le haut et l'une des parties saillantes inclinée vers le bas. Cette disposition permet de faciliter la réalisation de l'accessoire.

Avantageusement encore, la protubérance périphérique forme un disque.

Cette disposition permet de faciliter la rotation à haute vitesse de l'accessoire, jusqu'à 8 000 t/min environ.

Avantageusement encore, une nervure périphérique inférieure entoure la zone annulaire inférieure. Cette disposition permet de former une sorte de cloche dans laquelle la préparation est travaillée par la ou les conformations saillantes.

Avantageusement encore, au moins un bossage et au moins une cavité sont ménagés sur la zone annulaire inférieure. Les bossages peuvent notamment servir à loger la partie centrale des pièces formant deux parties saillantes. Lors de la rotation de l'accessoire, l'alternance de bossages et de cavités permet de réaliser des mouvements vibratoires dans la préparation, qui facilitent son mélange.

Avantageusement alors, le ou au moins l'un des orifices est agencé dans le ou l'un des bossages. Cette disposition permet d'aspirer la partie liquide de la préparation dans ledit orifice, ce qui favorise le mélange de la préparation et la réalisation d'émulsions.

Avantageusement alors, la ou au moins l'une des conformations saillantes est agencée sur le ou l'un des bossages. Cette disposition permet un meilleur mélange de la préparation et favorise le phénomène de cavitation favorable à la réalisation d'émulsions.

Selon un mode de réalisation, la zone annulaire inférieure entoure un organe de centrage. D'autres modes de réalisations sont envisageables, notamment une zone annulaire inférieure entourant un organe d'entraînement ou une cheminée portant un organe d'entraînement.

L'invention sera mieux comprise à l'étude d'un exemple de réalisation, pris à titre nullement limitatif, illustré dans les figures annexées, dans lesquelles :
- la figure 1 est une vue en coupe d'un appareil électroménager de préparation culinaire comportant un accessoire de travail rotatif selon l'invention,
- la figure 2 est une vue selon une première orientation de l'accessoire de travail rotatif montré à la figure 1,
- la figure 3 est une vue selon une deuxième orientation de l'accessoire de travail rotatif montré aux figures 1 et 2.

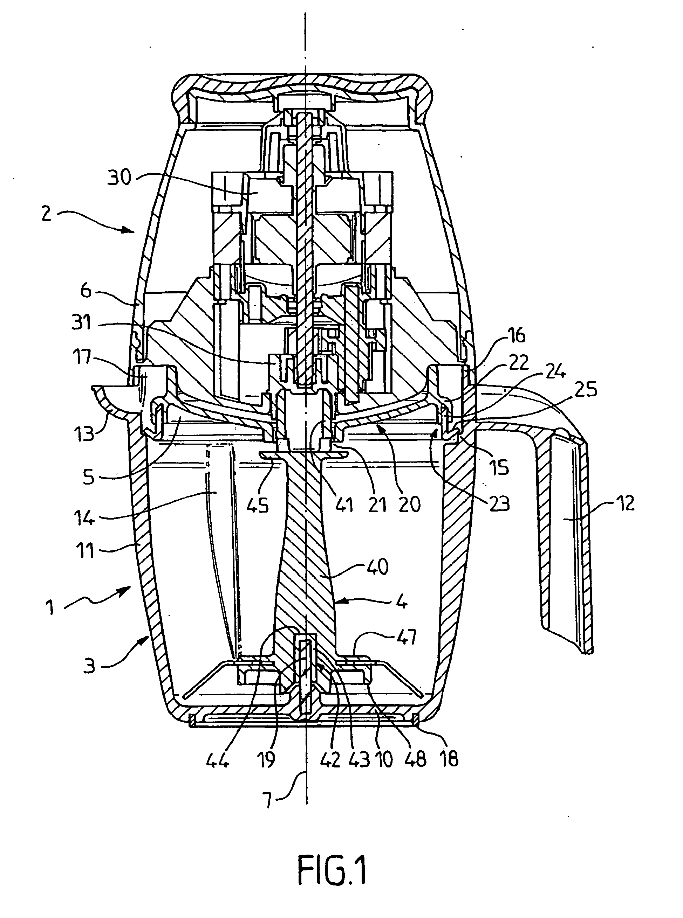

Un appareil électroménager de préparation culinaire comportant un accessoire de travail rotatif pour la préparation de boissons selon la présente invention est illustré à la figure 1.

L'appareil électroménager de préparation culinaire montré à la figure 1 comporte une partie inférieure 1, comprenant un récipient de travail 3 et un accessoire de travail rotatif 4, et une partie supérieure 2, comprenant une coupelle 5 et un boîtier moteur 6.

Le récipient de travail 3 présente un fond 10 et une paroi latérale 11 munie d'une poignée 12 et d'un bec verseur 13. Des nervures 14 sont réparties sur la face intérieure de la paroi latérale 11. La face interne de la paroi latérale 11 présente un décrochement 15 au-dessus des nervures 14. Le récipient de travail 3 présente un bord supérieur 16 de géométrie cylindrique, avec une échancrure 17 au-dessus du bec verseur 13. Un anneau antidérapant 18 est disposé sous le fond 10. Un élément de guidage 19 est agencé sur le fond 10 du récipient de travail 3.

La coupelle 5 est indépendante du boîtier moteur 6. La coupelle 5 comprend une pièce 20 présentant une ouverture 21 prévue pour le passage de l'extrémité supérieure de l'accessoire de travail rotatif 4. La pièce 20 comporte une gorge annulaire inférieure 22 prévue pour recevoir un joint 23. Le joint 23 est solidaire de la coupelle 5. Le joint 23 comporte une partie supérieure tubulaire 24 montée dans la coupelle 5. Plus particulièrement, la partie supérieure tubulaire 24 est montée amovible dans la gorge annulaire inférieure 22 de la pièce 20. Le joint 23 comporte une lèvre annulaire 25 déformable. La lèvre annulaire 25 s'étend vers l'extérieur. La dureté du joint 23 est adaptée au poids de la partie supérieure 2 et à l'effort nécessaire pour la commande de l'appareil. La dureté shore est par exemple comprise entre 40 et 50 shore. Le joint 23 est par exemple réalisé en silicone.

Le boîtier moteur 6 inclut un moteur 30 associé à des moyens d'entraînement 31 de l'accessoire de travail rotatif 4. Tel que représenté à la figure 1, l'entraînement est un entraînement direct.

L'accessoire de travail rotatif 4 comporte un moyeu 40 présentant un organe d'entraînement 41 à l'extrémité supérieure et un organe de centrage 42 à l'extrémité inférieure. L'organe de centrage 42 est par exemple formé par un palier 43 monté dans une cavité 44 de l'extrémité inférieure du moyeu 40, prévu pour coopérer avec l'élément de guidage 19 du récipient de travail 3. Le palier 43 permet des vitesses de rotation de l'accessoire de travail rotatif 4 jusqu'à des valeurs de 4 000 à 8 000 t/min environ.

L'accessoire de travail rotatif 4 comporte une collerette 45 s'étendant au-dessous de l'ouverture 21 ménagée sur la face inférieure de la partie supérieure 2, pour protéger l'ouverture 21 des projections d'aliments.

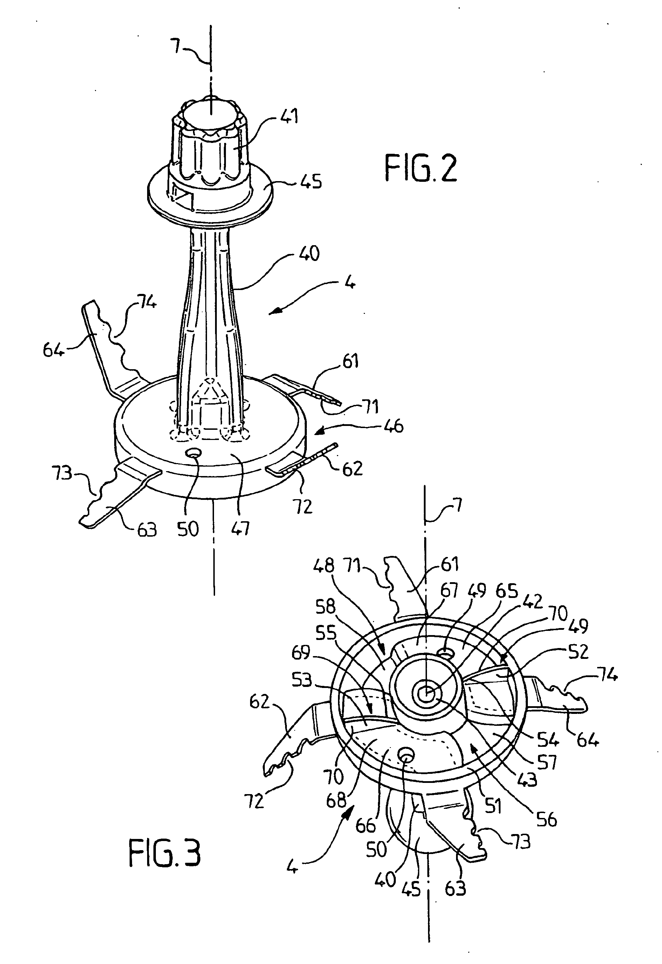

Tel que mieux visible aux figures 2 et 3, l'accessoire de travail rotatif 4 comporte une protubérance périphérique 46 agencée sur la partie inférieure du moyeu 40. La protubérance périphérique 46 forme un disque. La protubérance périphérique 46 présente une face supérieure 47, visible à la figure 2, et une face inférieure 48, visible à la figure 3. Deux orifices 49, 50 relient la face inférieure 48 à la face supérieure 47.

Quatre parties saillantes 61, 62, 63, 64 s'étendent à l'extérieur de la protubérance périphérique 46. Plus particulièrement, les parties saillantes 61, 62, 63, 64 s'étendent à partir de la périphérie de la protubérance périphérique 46. Les parties saillantes 61, 62, 63, 64 sont de préférence métalliques. Les parties saillantes 61, 62, 63, 64 comportent un bord d'attaque 71, 72, 73, 74. Les bords d'attaque 71, 72, 73, 74 sont avantageusement non coupants. Les bords d'attaque 71, 72, 73, 74 comportent de préférence des dents.

Les parties saillantes 62, 64 sont inclinées vers le haut à partir de la protubérance périphérique 46. Les parties saillantes 61, 63 sont inclinées vers le bas à partir de la protubérance périphérique 46. Les parties saillantes 62, 64 inclinées vers le haut et les parties saillantes 61, 63 inclinées vers le bas sont agencées de manière alternée autour de la protubérance 46.

Tel que mieux visible à la figure 3, les parties saillantes 61, 62, 63, 64 sont issues de deux pièces 65, 66, chaque pièce 65, 66 comportant l'une des parties saillantes 64, 62 inclinée vers le haut et l'une des parties saillantes 61, 63 inclinée vers le bas.

La protubérance périphérique 46 présente une nervure périphérique inférieure 51. La protubérance périphérique 46 comporte une zone annulaire inférieure 56 agencée entre la nervure périphérique inférieure 51 et l'organe de centrage 42.

Deux nervures radiales inférieures 52, 53 sont agencées dans la zone annulaire inférieure 56. Les nervures radiales inférieures 52, 53 sont décalées par rapport à l'axe de rotation 7 de l'accessoire de travail rotatif 4. Les nervures radiales inférieures 52, 53 présentent une extrémité interne 54, 55 décroissant en hauteur. Les nervures radiales inférieures 52, 53 forment des conformations saillantes 69 présentant une face d'attaque 70.

La zone annulaire inférieure 56 présente deux bossages 67, 68 et deux cavités 57, 58. Les bossages 67, 68 correspondent au passage des pièces 65, 66 dans la protubérance périphérique 46. Les nervures radiales inférieures 52, 53 sont agencées sur les bossages 67, 68.

Les orifices 49, 50 sont agencés dans les bossages 67, 68. Les orifices 49, 50 permettent notamment de faciliter le centrage des pièces 65, 66 dans leur moule lors d'un surmoulage du moyeu 40 sur les pièces 65, 66.

La distance entre la face inférieure 48 de la protubérance périphérique 46 et le fond 10 du récipient de travail 3 est de préférence comprise entre 5 et 10 mm.

La présente invention fonctionne de la manière suivante.

L'utilisateur met en place l'accessoire de travail rotatif 4 dans le récipient de travail 3, verse ou dispose les matières alimentaires dans le récipient de travail 3, met en place la coupelle 5 et le boîtier moteur 6, et met en marche l'appareil.

Les parties solides telles que les glaçons sont broyées par les parties saillantes 61, 62, 63, 64. Les conformations saillantes 69 de la zone annulaire inférieure 56 de la protubérance périphérique 46 et les parties saillantes 61, 62, 63, 64 permettent le mélange du liquide. Les conformations saillantes 69 associées aux bossages 67, 68, aux cavités 57, 58, aux orifices 49, 50 et à la nervure périphérique inférieure 51 favorisent la réalisation d'une émulsion.

Une préparation homogène incorporant des particules de glace peut ainsi être obtenue aisément et rapidement.

A titre de variante, les parties saillantes 61, 62, 63, 64 ne sont pas nécessairement au nombre de quatre. Au moins deux parties saillantes s'étendent à l'extérieur de la protubérance périphérique 46. Avantageusement alors, une des parties saillantes est inclinée vers le haut à partir de la protubérance périphérique et une autre partie saillante est inclinée vers le bas à partir de la protubérance périphérique.

A titre de variante, les parties saillantes 61, 62, 63, 64 ne s'étendent pas nécessairement à partir de la périphérie de la protubérance périphérique 46, tout en s'étendant à l'extérieur de la protubérance périphérique 46 dans une direction au moins partiellement radiale par rapport à l'axe de rotation 7.

A titre de variante, la protubérance périphérique 46 comporte au moins une conformation saillante 69.

A titre de variante, la protubérance périphérique 46 présente une zone annulaire inférieure 56 avec moins un bossage et au moins une cavité.

A titre de variante, au moins un orifice relie la face inférieure 48 à la face supérieure 47.

A titre de variante, les moyens d'entraînement 31 n'appartiennent pas nécessairement à un boîtier moteur, mais peuvent par exemple appartenir à un couvercle obturant le récipient de travail 3 et être entraînés par un boîtier moteur indépendant dudit couvercle.

A titre de variante l'élément de guidage 19 n'est pas nécessairement issu du fond du récipient de travail 1, mais peut par exemple appartenir à une embase mobile en rotation par rapport au moyeu, comme décrit par exemple dans le document FR 2 743 710 ou le document FR 2 768 608. L'élément de guidage 19 n'est pas nécessairement formé par un axe métallique, mais peut par exemple être formé par le fond du récipient de travail 1 ou par l'embase précitée.

A titre de variante complémentaire, l'organe d'entraînement 41 n'est pas nécessairement ménagé sur l'extrémité supérieure du moyeu 40 et l'organe de centrage 42 n'est pas nécessairement ménagé sur l'extrémité inférieure du moyeu 40. Un organe de centrage ménagé sur l'extrémité supérieure du moyeu peut coopérer avec un élément de guidage monté dans un couvercle fermant un récipient de travail, un dispositif d'entraînement agencé dans le fond du récipient de travail coopérant avec un organe d'entraînement ménagé sur l'extrémité inférieure du moyeu.

La présente invention n'est nullement limitée à l'exemple de réalisation décrit et à ses variantes, mais englobe de nombreuses modifications dans le cadre des revendications.

## Revendications

1. Accessoire de travail rotatif pour appareil électroménager de préparation culinaire, comportant un moyeu (40) présentant un organe d'entraînement (41) et au moins deux parties saillantes (61, 62, 63, 64) s'étendant à partir du moyeu (40), une protubérance périphérique (46) étant agencée sur la partie inférieure du moyeu (40), les parties saillantes (61, 62, 63, 64) s'étendant à l'extérieur de la protubérance périphérique (46), la protubérance périphérique (46) comprenant une face inférieure (48) présentant une zone annulaire inférieure (56) comportant au moins une conformation saillante. (69) présentant une face d'attaque (70), au moins un orifice (49, 50) reliant la face inférieure (48) à une face supérieure (47) de la protubérance périphérique (46), **caractérisé en ce que** ledit orifice (49, 50) est dégagé.

2. Accessoire de travail rotatif selon la revendication 1, **caractérisé en ce que** la ou au moins l'une des conformations saillantes (69) est formée par une nervure radiale inférieure (52, 53).

3. Accessoire de travail rotatif selon l'une des revendications 1 ou 2, **caractérisé en ce que** les parties saillantes (61, 62, 63, 64) sont métalliques.

4. Accessoire de travail rotatif selon l'une des revendications 1 à 3, **caractérisé en ce que** les parties saillantes (61, 62, 63, 64) comportent un bord d'attaque (71, 72, 73, 74) non coupant.

5. Accessoire de travail rotatif selon l'une des revendications 1 à 4, **caractérisé en ce que** les parties saillantes (61, 62, 63, 64) comportent un bord d'attaque (71, 72, 73, 74) muni de dents.

6. Accessoire de travail rotatif selon l'une des revendications 1 à 5, **caractérisé en ce qu'**une des parties saillantes (62, 64) est inclinée vers le haut à partir de la protubérance périphérique (46) et qu'une autre des parties saillantes (61, 63) est inclinée vers le bas à partir de la protubérance périphérique (46).

7. Accessoire de travail rotatif selon la revendication 6, **caractérisé en ce qu'**il comporte quatre parties saillantes (61, 62, 63, 64), deux des parties saillantes (62, 64) étant inclinées vers le haut et les deux autres parties saillantes (61, 63) étant inclinées vers le bas, les parties saillantes inclinées vers le haut (62, 64) et les parties saillantes inclinées vers le bas (61, 63) étant agencées de manière alternée autour de la protubérance (46).

8. Accessoire de travail rotatif selon la revendication 7, **caractérisé en ce** les parties saillantes (61, 62, 63, 64) sont issues de deux pièces (65, 66), chaque pièce (65, 66) comportant l'une des parties saillantes (62, 64) inclinée vers le haut et l'une des parties saillantes (61, 63) inclinée vers le bas.

9. Accessoire de travail rotatif selon l'une des revendications 1 à 8, **caractérisé en ce que** la protubérance périphérique (46) forme un disque.

10. Accessoire de travail rotatif selon l'une des revendications 1 à 9, **caractérisé en ce qu'**une nervure périphérique inférieure (51) entoure la zone annulaire inférieure (56).

11. Accessoire de travail rotatif selon l'une des revendications 1 à 10, **caractérisé en ce qu'**au moins un bossage (67, 68) et au moins une cavité (57, 58) sont ménagés sur la zone annulaire inférieure (56).

12. Accessoire de travail rotatif selon la revendication 11, **caractérisé en ce que** le ou au moins l'un des orifices (49, 50) est agencé dans le ou l'un des bossages (67, 68).

13. Accessoire de travail rotatif selon l'une des revendications 11 ou 12, **caractérisé en ce que** la ou les conformations saillantes (69) sont agencées sur le ou l'un des bossages (67, 68).

14. Accessoire de travail rotatif selon l'une des revendications 1 à 13, **caractérisé en ce que** la zone annulaire inférieure (56) entoure un organe de centrage (42).

## Claims

1. A rotary work accessory for a household electrical appliance for preparing food, said accessory comprising a hub (40) having a drive member (41) and at least two projecting portions (61, 62, 63, 64) extending from the hub (40), a peripheral protuberance (46) being arranged on the bottom portion of the hub (40), the projecting portions (61, 62, 63, 64) extending outside the peripheral protuberance (46), the peripheral protuberance (46) having a bottom face (48) presenting a bottom annular zone (56) provided with at least one projecting shape (69) presenting a leading edge (70), at least one orifice (49, 50) connecting the bottom face (48) to a top face (47) of the peripheral protuberance (46), said rotary work accessory being **characterized in that** said orifice (49, 50) is unobstructed.

2. A rotary work accessory according to claim 1, **characterized in that** the or at least one of the projecting shapes (69) is formed by bottom radial rib (52, 53).

3. A rotary work accessory according to claim 1 or claim 2, **characterized in that** the projecting portions (61, 62, 63, 64) are made of metal.

4. A rotary work accessory according to any one of claims 1 to 3, **characterized in that** each of the projecting portions (61, 62, 63, 64) has a leading edge (71, 72, 73, 74) that is not sharp, i.e. that is not cutting.

5. A rotary work accessory according to any one of claims 1 to 4, **characterized in that** each of the projecting portions (61, 62, 63, 64) has a leading edge (71, 72, 73, 74) that is provided with teeth.

6. A rotary work accessory according to any one of claims 1 to 5, **characterized in that** one of the projecting portions (62, 64) slopes upwards from the peripheral protuberance (46) and another of the projecting portions (61, 63) slopes downwards from the peripheral protuberance (46).

7. A rotary work accessory according to claim 6, **characterized in that** it has four projecting portions (61, 62, 63, 64), two of the projecting portions (62, 64) sloping upwards and the other two projecting portions (61, 63) sloping downwards, the upwardly-sloping projecting portions (62, 64) and the downwardly-sloping projecting portions (61, 63) being arranged in alternation around the protuberance (46).

8. A rotary work accessory according to claim 7, **characterized in that** the projecting portions (61, 62, 63, 64) are integral with two pieces (65, 66), each piece (65, 66) being provided with one of the upwardly-sloping projecting portions (62, 64) and with one of the downwardly-sloping projecting portions (61, 63).

9. A rotary work accessory according to any one of claims 1 to 8, **characterized in that** the peripheral protuberance (46) forms a disk.

10. A rotary work accessory according to any one of claims 1 to 9, **characterized in that** a bottom peripheral skirt (51) surrounds the bottom annular zone (56).

11. A rotary work accessory according to any one of claims 1 to 10, **characterized in that** at least one projection (67, 68) and at least one cavity (57, 58) are provided in the bottom annular zone (56).

12. A rotary work accessory according to claim 11, **characterized in that** the or at least one of the orifices (49, 50) is arranged in the or in one of the projections (67, 68).

13. A rotary work accessory according to claim 11 or claim 12, **characterized in that** the projecting shape(s) (69) are arranged on the or on one of the projections (67, 68).

14. A rotary work accessory according to any one of claims 1 to 13, **characterized in that** the bottom annular zone (56) surrounds a centering member (42).

## Patentansprüche

1. Rotierendes Arbeitszubehörteil für ein Elektrohaushaltsgerät zur Nahrungsmittelzubereitung, mit einer ein Antriebsorgan (41) aufweisenden Nabe (40) und mindestens zwei hervorstehenden Abschnitten (61, 62, 63, 64), die sich ausgehend von der Nabe (40) erstrecken, wobei ein Umfangsvorsprung (46) am unteren Abschnitt der Nabe (40) ausgebildet ist, wobei sich die hervorstehenden Abschnitte (61, 62, 63, 64) außerhalb des Umfangsvorsprungs (46) erstrecken, wobei der Umfangsvorsprung (46) eine untere Fläche (48) aufweist, die einen ringförmigen unteren Bereich (56) mit mindestens einer hervorstehenden Form (69) besitzt, welche eine Angriffsfläche (70) aufweist, wobei mindestens eine Öffnung (49, 50) die untere Fläche (48) mit einer oberen Fläche (47) des Umfangsvorsprungs (46) verbindet, **dadurch gekennzeichnet, dass** die Öffnung (49, 50) freiliegt.

2. Rotierendes Arbeitszubehörteil nach Anspruch 1, **dadurch gekennzeichnet, dass** die hervorstehende Form oder mindestens eine der hervorstehenden Formen (69) durch eine radiale untere Rippe (52, 53) gebildet ist.

3. Rotierendes Arbeitszubehörteil nach Anspruch 1 oder 2, **dadurch gekennzeichnet, dass** die hervorstehenden Abschnitte (61, 62, 63, 64) metallisch sind.

4. Rotierendes Arbeitszubehörteil nach einem der Ansprüche 1 bis 3, **dadurch gekennzeichnet, dass** die hervorstehenden Abschnitte (61, 62, 63, 64) eine nicht schneidende Angriffskante (71, 72, 73, 74) aufweisen.

5. Rotierendes Arbeitszubehörteil nach einem der Ansprüche 1 bis 4, **dadurch gekennzeichnet, dass** die hervorstehenden Abschnitte (61, 62, 63, 64) eine mit Zähnen versehene Angriffskante (71, 72, 73, 74) aufweisen.

6. Rotierendes Arbeitszubehörteil nach einem der Ansprüche 1 bis 5, **dadurch gekennzeichnet, dass** einer der hervorstehenden Abschnitte (62, 64) ausgehend von dem Umfangsvorsprung (46) nach oben geneigt ist und ein anderer der hervorstehenden Abschnitte (61, 63) ausgehend von dem Umfangsvorsprung (46) nach unten geneigt ist.

7. Rotierendes Arbeitszubehörteil nach Anspruch 6, **dadurch gekennzeichnet, dass** es vier hervorstehende Abschnitte (61, 62, 63, 64) aufweist, wobei zwei der hervorstehenden Abschnitte (62, 64) nach oben geneigt und die beiden anderen hervorstehenden Abschnitte (61, 63) nach unten geneigt sind, wobei die nach oben geneigten hervorstehenden Abschnitte (62, 64) und die nach unten geneigten hervorstehenden Abschnitte (61, 63) abwechselnd um den Vorsprung (46) angeordnet sind.

8. Rotierendes Arbeitszubehörteil nach Anspruch 7, **dadurch gekennzeichnet, dass** die hervorstehenden Abschnitte (61, 62, 63, 64) aus zwei Teilen (65, 66) hervorgehen, wobei jedes Teil (65, 66) einen der nach oben geneigten hervorstehenden Abschnitte (62, 64) und einen der nach unten geneigten hervorstehenden Abschnitte (61, 63) aufweist.

9. Rotierendes Arbeitszubehörteil nach einem der Ansprüche 1 bis 8, **dadurch gekennzeichnet, dass** der Umfangsvorsprung (46) eine Scheibe bildet.

10. Rotierendes Arbeitszubehörteil nach einem der Ansprüche 1 bis 9, **dadurch gekennzeichnet, dass** eine untere Umfangsrippe (51) den ringförmigen unteren Bereich (56) umgibt.

11. Rotierendes Arbeitszubehörteil nach einem der Ansprüche 1 bis 10, **dadurch gekennzeichnet, dass** mindestens eine Erhebung (67, 68) und mindestens eine Vertiefung (57, 58) am ringförmigen unteren Bereich (56) ausgebildet sind.

12. Rotierendes Arbeitszubehörteil nach Anspruch 11, **dadurch gekennzeichnet, dass** die Öffnung oder mindestens eine der Öffnungen (49, 50) in der Erhebung oder in einer der Erhebungen (67, 68) ausgebildet ist.

13. Rotierendes Arbeitszubehörteil nach Anspruch 11 oder 12, **dadurch gekennzeichnet, dass** die hervorstehende(n) Form(en) (69) an der Erhebung oder an einer der Erhebungen (67, 68) ausgebildet ist (sind).

14. Rotierendes Arbeitszubehörteil nach einem der Ansprüche 1 bis 13, **dadurch gekennzeichnet, dass** der ringförmige untere Bereich (56) ein Zentrierungsorgan (42) umgibt.
